(19) Europäisches Patentamt
European Patent Office
Office européen des brevets

(11) **EP 3 135 019 B1**

(12) **EUROPEAN PATENT SPECIFICATION**

(45) Date of publication and mention
of the grant of the patent:
**17.02.2021 Bulletin 2021/07**

(21) Application number: **15722328.0**

(22) Date of filing: **24.04.2015**

(51) Int Cl.:
**H04L 29/08** (2006.01)      **H04L 29/06** (2006.01)

(86) International application number:
**PCT/US2015/027631**

(87) International publication number:
**WO 2015/164813 (29.10.2015 Gazette 2015/43)**

(54) **METHOD AND SYSTEM FOR BANDWIDTH-DEPENDENT FILE TRANSFER**

VERFAHREN UND SYSTEM ZUM BANDBREITENABHÄNGIGEN DATEITRANSFER

PROCÉDÉ ET SYSTÈME DE TRANSFERT DE FICHIERS DÉPENDANT DE LA BANDE PASSANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2014 CN 201410171672**

(43) Date of publication of application:
**01.03.2017 Bulletin 2017/09**

(73) Proprietor: **Advanced New Technologies Co., Ltd. George Town, Grand Cayman KY1-9008 (KY)**

(72) Inventor: **CHEN, Cheng**
**Hangzhou 311121 (CN)**

(74) Representative: **Barker Brettell LLP**
**Medina Chambers**
**Town Quay**
**Southampton SO14 2AQ (GB)**

(56) References cited:
**EP-A1- 2 169 914          WO-A1-2013/004260**
**WO-A2-2011/038028      US-A1- 2001 010 059**
**US-A1- 2012 005 366      US-A1- 2012 192 080**
**US-A1- 2012 259 950      US-A1- 2013 185 388**

## Description

### TECHNICAL FIELD

This application relates to the field of computer communications technology, particularly to a method and a system for bandwidth-dependent file transfer.

### BACKGROUND

Thanks to modern data communication technologies and the rapid development of the network, users can use a browser to browse images, texts videos and many other file formats stored on a server.

Internet users have a general need to browse files on the server. In a process of file browsing, the user uses the client browser to send a browsing request to the server, and upon receiving the user request, the server returns data to the client browser, which displays the received data to the user. Usually the files browsed by the user contain image files and other files that may have a large amount of data.

Due to variations of network conditions in different locations or different time periods, many users suffer low network speed. Under such network conditions, the webpages that contain data-intensive images and videos can be slow to open, affecting user browsing experience.

Usually, files that contain a large amount of data can be compressed to reduce the amount of data and improve webpage access speed. For example, the data size of a picture may be reduced by compressing the image file. The image quality is usually measured by the image compression ratio. If a picture's original file size is 2.5MB (megabytes), a 100% quality copy of the picture corresponds to a picture size of 2.5MB. An 80% quality copy of the picture may correspond to a file size of 1.15MB, a 50% quality copy of the picture may correspond to a file size of 692KB (kilobytes), while a 30% quality copy may correspond to a file size of 341KB. For human eyes, the perceived quality difference between a picture of 100% quality and a copy of the same picture of 30% quality is not large, and the difference between that of 100% quality and 80% quality is almost unperceivable. However, the differences of the file sizes of the 100%, 80% and 30% picture quality are quite large. Given the same network speed, the speed of transferring is faster with a smaller file size. Therefore, in order to accelerate the speed of opening webpages, the amount of data that needs to be transferred is reduced by compressing the picture and video files in a webpage. In order to do this, the bandwidth (Internet speed) may be first measured, and a decision is made whether to reduce the file sizes of the data-intensive files, and if yes, by how much.

One of the existing methods of measuring the bandwidth is to use a fixed-resource file that has a fixed size. Specifically, a fixed-resource file having a fixed size is placed on the Web server. The fixed-resource file may be an image, a video or any other suitable format, but is usually not part of the webpage content. The user browser determines the time it takes to receive the fixed-resource file, and uses the determined time to calculate a value of the bandwidth, which is stored at the client. The client requests files of a certain quality according to the determined network bandwidth.

The existing method has a problem in practice. At the time when the request for webpage files is made, the value of the bandwidth available may be the one that was measured initially, and as a result any changes to the network condition since then until the present time is not taken into account. If the user has switched to a different network, or moved to a different geographic location, the network speed may have changed. The prior art does not provide a way to update the network speed, and as a result, the quality of the files sent to the client may not be optimal for the client's current network speed. For example, if the current network speed has been reduced from the initial speed, the browser would request files of overly high quality to cause longer receiving time under the current network conditions. Likewise, if the current network speed has been increased from the initial speed, the browser would request files of an unnecessarily low quality.

US2012005366 (A1) discloses a live streaming system/method that provides cross platform live streaming capabilities to mobile devices. A file format compatible with legacy HTTP infrastructure is used to deliver media over a persistent connection. Legacy client media players can dynamically change the encoded rate of the media delivered over a persistent connection. Standard HTTP servers may be used without modification, leveraging standard media players embedded in mobile devices for seamless media delivery over wireless networks with high bandwidth fluctuations.

US2012259950 (A1) discloses a content distribution system comprising a content client and a content server connected through a network. The content server is configured to send the content client a session description comprising at least one media description to enable it to receive over the network a content item. The system comprises a network monitor for monitoring network traffic going through the network, and a recommender for marking in dependency upon the network monitor, one or more of the media descriptions in the session description to obtain a marked session description. The marked media description recommends the content client to prefer certain content above others in view of the current network condition. For example, if available bandwidth is low, content is recommended which requires low bandwidth. Network congestion is thereby avoided for all users of the system.

US2012/192080 A1 discloses a system that is configured to: store contents of a web page; determine an estimate of available bandwidth for a page load for the web page; select one or more of the contents for the page load in response to a browser request from a browser; modify the selected contents based on the estimate of available bandwidth to produce modified contents of the web page; and transmit a part of the modified contents to the browser.

US2013/185388 A1 discloses an approach for downloading data over a network that uses automatic bandwidth detection. According to the approach, a first version of data to be requested is selected from a plurality of available versions of the data. The first version may be selected based upon a default selection or based upon prior determined connection speeds. A client requests the first version of the data from a server and the client begins receiving the first version of the data. A determination of at least an approximate connection speed is made based upon at least a portion of the first version of the data received at the client. A determination is then made, based upon the determined connection speed, whether a different version of the data should be requested. If so, then the client requests a different version of the data from the server.

US2001/010059 A1 discloses an apparatus and method for determining transfer time and/or bandwidth between devices connected to a computer network includes sending a script or redirect signal to a browser attempting to fetch a banner from a server that causes a timer or clock to run between the initiation of a subsequent fetch page, fetch image, or other request by the browser and the delivery of subsequent data to the browser. The bandwidth of the device and/or the transfer time between the server and the device on which the browser is operating and the bandwidth of the device can then be used in the selection of which subsequent files, images, scripts, banners, executable software, or other content to be served to the browser or in the selection or configuration of web pages, electronic mail, or executable software to be served to the browser. In addition, the operational or performance characteristics or configuration of the device on which the browser is operating can also be determined and used during the selection of which subsequent files, images, banners, executable software or other content to be served to the browser or in the selection or configuration of web pages, electronic mail, or executable software to be served to the browser.

WO2013/004260 A1 discloses a technique of adjusting the download of one or more adjustable content streams, the one or more content streams are provided in a network by a server for streaming the one or more content streams to one or more clients and each of the one or more content streams comprises a plurality of content segments. A method comprises the steps of: generating a manifest file comprising one or more media bit rate candidates each of which indicating an encoded media data rate of the content segments of the one or more content streams, wherein the media data rate candidates are generate by considering a perceived quality of the one or more content streams; and manipulating the manifest file by adjusting at least one of the one or more media data rate candidates based on the available data rate between the server and the one or more clients for downloading the content segments.

## SUMMARY

The invention is specified by the independent claims. Further embodiments are specified in the dependent claims.

## BRIEF DESCRIPTION OF THE FIGURES

The detailed description is described with reference to the accompanying figures.

FIG. 1 is a flow chart of an example of the disclosed method of bandwidth-dependent file transfer.
FIG. 2 is a flowchart of a client-centric process of the disclosed method for bandwidth-dependent file transfer.
FIG. 3 is a flowchart of a server-centric process of the disclosed method for bandwidth-dependent file transfer.
FIG. 4 is a block diagram of a system implementing a client-centric process of the disclosed method for bandwidth-dependent file transfer.
FIG. 5 is a block diagram of a record calculation unit used in the system of FIG. 4 for implementing a client-centric process of the disclosed method for bandwidth-dependent file transfer.
FIG. 6 is a block diagram of a system implementing a server-centric process of the disclosed method for bandwidth-dependent file transfer.

## DETAILED DESCRIPTION

The present disclosure is described in further detail in conjunction with accompanying figures and example embodiments. In the description, the term "technique(s)," for instance, may refer to a method, an apparatus device, a system, and/or computer-readable instructions as permitted by the context above and throughout the present disclosure.

In this description, the order in which a process is described is not intended to be construed as a limitation, and any number of the described process blocks may be combined in any order to implement the method, or an alternate method. An embodiment is described in sequential steps only for the convenience of illustration. Unless it would cause a conflict, the examples and embodiments described in the present disclosure, and the characteristics and features thereof, may be combined freely. Further, not every step described in the embodiments is required in order to practice the techniques of this disclosure.

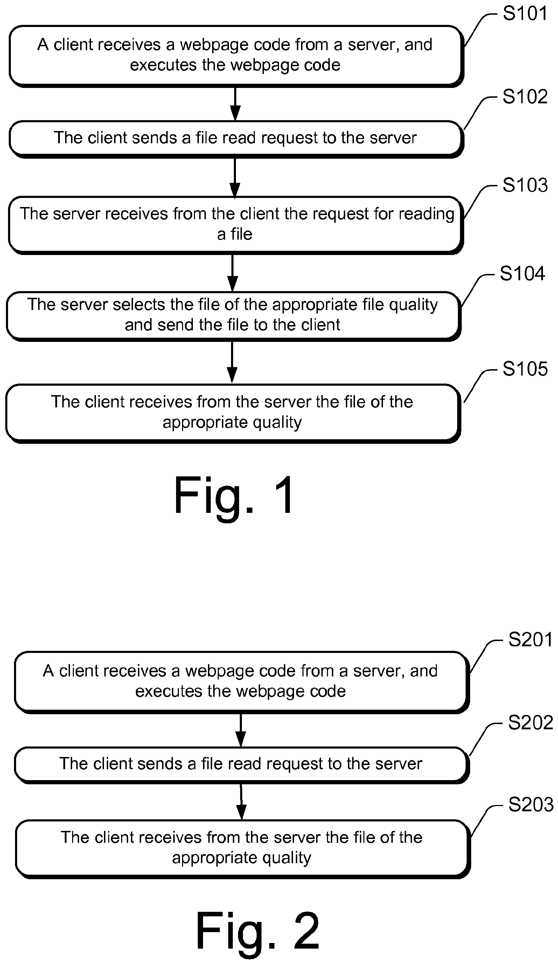

FIG. 1 is a flow chart of an example of the disclosed method of bandwidth-dependent file transfer.

At block S101, a client receives a webpage code from a server, and executes the webpage code.

The webpage code may contain codes that query for or request a current bandwidth value. The page can also contain codes to select the file quality according to the bandwidth value.

At block S102, the client sends a file read request to the server.

The request may include the current bandwidth value, or file quality selected according to the current bandwidth value.

Files of different qualities of the original file can be obtained by compressing the original file, with different compression rate resulting in a version of the corresponding quality level. The file quality may be used to represent a ratio between the original file size and the compressed file size. The size of a file may be a storage size occupied by the file when saved. Examples of compressible files include image, video, audio and other file formats.

For example, one can use an image quality to represent the image compression ratio. With an original image file having a size of 2.5MB (megabytes), a 100% picture quality corresponds to a file size of 2.5MB. Example relationships between the quality and image size after compression are: a 80% picture quality corresponds to a picture sizes of 1.15MB, a 50% picture quality corresponds to a picture size of 692KB (in kilobytes), a 30% picture quality corresponds to a picture size of 341KB, and a 10% picture quality corresponds to a picture size of 223KB, etc.

The current bandwidth value may include the client bandwidth values obtained in a previous file transfer. The file whose receiving speed is used for measuring the bandwidth value may be an inherent part of a webpage visited by the client. Or, the current bandwidth value may be a bandwidth value calculated by downloading a fixed-resource file that is used for such bandwidth value measurement purpose. The current bandwidth value may also be null.

The current bandwidth value has a corresponding relationship with the file quality. The corresponding relationship may be defined according to a rule. For example, a higher bandwidth value corresponds to a higher quality, and vice versa. The corresponding relationship between the current bandwidth value and the file quality can be preset, or provided in time based on user feedback.

The client chooses an appropriate file quality according to the current bandwidth value with reference to the corresponding relationship between the current bandwidth value and the file quality. If the current bandwidth value is null, that is, no current bandwidth value is available, the client may select the highest quality by default.

An example of the relationship between the current bandwidth value and file quality is shown in TABLE 1.

TABLE 1

| Bandwidth Value | File Quality |
|---|---|
| Bandwidth ≥ 4Mbps | 100% |
| 2Mbps ≤ bandwidth < 4Mbps | 80% |
| 1Mbps ≤ bandwidth < 2Mbps | 50% |
| 512Kbps ≤ bandwidth < 1Mbps | 30% |
| Bandwidth <512Kbps | 10% |

According to the relationship shown in TABLE one, when a client's current bandwidth value is 3Mbps, one can select a file corresponding to the 80% file quality.

At block S 103, the server receives from the client the request for reading a file. The request includes a value of the current bandwidth, or the file quality corresponding to the current bandwidth value.

At block S 104, the server selects the file of the appropriate file quality and sends the file to the client.

The method provides multiple versions of the requested file, each version representing one of the various quality levels. To send the requested file at the selected quality level to the client, the server sends one of versions that represents the selected quality level.

When the request to read a file contains the current bandwidth value, the server selects the corresponding file quality based on the corresponding relationship between the current bandwidth value and the file quality as described in Block S 102. The server then selects an appropriate file corresponding to the selected file quality, and sends the selected file to the client. When the requests to read the file specifies the file quality corresponding to the current bandwidth value, the server selects an appropriate file corresponding to the received file quality and sends the selected file to the client.

The association between the file and its corresponding file quality may be achieved using URL (Uniform Resource Locator) addresses. For example, a unique URL address may be set for each file quality to locate a version of the file corresponding to the respective file quality.

For a picture file named "A.jpg", for instance, the URL of the compressed image file of 50% quality may be set to be "http://domain/a.jpg_q50.jpg". The URL of the compressed image file of 80% quality of the same original picture file may be set to be "http://domain/a.jpg_q80.jpg".

The requested file may be preprocessed to obtain the different compression versions of the requested file, which are stored at the server at corresponding URL addresses. The server selects the URL corresponding to the current file quality, visits the URL to retrieve the corresponding version of file and return it to the client.

Alternatively, the requested file may be processed to obtain the different compression versions of the requested file upon receiving from the client the request for reading the file. For example, the server may set a URL for each file quality, but does not preprocess the file to obtain and store compressed files at these URL addresses until requested. When requested, the server analyzes the URL corresponding to the current file quality to determine an appropriate file quality, processes the original file accordingly to obtain a compressed file of the appropriate file quality, and returns the compressed file to the client.

At block S105, the client receives from the server the file of the appropriate quality.

Upon receiving files returned from the server, the client records size of each file received, and the time spent on receiving each file.

Based on the file size and the time to receive the file, the client may calculate a new value of the current bandwidth value and update it. Specifically, according to the size of each file and the time required to receive the file, the client may calculate a bandwidth value for each file separately, and calculate an average current bandwidth value for all files received using the bandwidth values calculated separately for these files. The current bandwidth value may be set to be the average bandwidth value, and stored at the client.

The bandwidth value for each file may be calculated using the following equation:

$$BW_n = \frac{S_n}{t_n},\qquad(1)$$

Where $n$ stands for the n-th file; $BW_n$ stands for the bandwidth value for receiving the n-th file, measured in a proper unit (e.g., Kbps); $S_n$ stands for the file size of the n-th file, in thousand byte (KB) for example; and $t_n$ stands for the time needed to receive the n-th file, in seconds (s).

For example, when the file is a picture file, its file size can be expressed as a multiplication of the number of pixels in length, the number of pixels in height and an image coefficient, which represents the storage space occupied by each pixel. In this case, the above equation (1) can be turned into:

$$BW_n = \frac{L_n \times H_n \times m}{t_n},\qquad(2)$$

Where $L_n$ is the number of pixels in length; $H_n$ is the number of pixels in height, $m$ is the image coefficient, in kilobytes (KB). The value of the image coefficient $m$ can be set based on testing the pixel storage sizes. An example coefficient value is 0.00016KB (per pixel).

The client's current average bandwidth value is calculated by totaling the bandwidth values to receive each file, and dividing the total by the number of files received.

For example, suppose the current client received N files in a session. The bandwidth value of the n-th file is $BW_n$. The range of $n$ is $1 \le n \le N$. The client's current average bandwidth value $BW_{average}$ is calculated by:

$$BW_{average} = \frac{\sum_{n=1}^{N} BW_n}{N}\qquad(3)$$

The calculated average bandwidth value $BW_{average}$ is set to be the current bandwidth value for the client, and stored. The current bandwidth value may be stored on the client.

The disclosed method is further described below from a client- centric point of view.

FIG. 2 is a flowchart of a client-centric process of the disclosed method for bandwidth-dependent file transfer.

At block S201, a client receives a webpage code from a server, and executes the webpage code. The webpage code may contain codes that query for or request a current bandwidth value. The page can also contain code to select the file quality according to the bandwidth value.

At block S202, the client sends a file read request to the server.

The request includes the current bandwidth value, or file quality selected according to the current bandwidth value.

Files of different qualities of the original file can be obtained by compressing the original file, with different compression rate resulting in a version of the corresponding quality level. The file quality may be used to represent a ratio between the original file size and the compressed file size. The size of a file may include a storage size occupied by the file when saved. The examples of compressible files may include image, video, audio and other file formats.

The current bandwidth value may include the client bandwidth values obtained in a previous file transfer. The file whose transfer is used for measuring the bandwidth value may be an inherent part of a webpage visited by the client. Or, the current bandwidth value may be a bandwidth value calculated after visiting a fixed-resource file that is used for such bandwidth measurement purpose. The current bandwidth value may also be null.

The current bandwidth value has a corresponding relationship with the file quality. The corresponding relationship may be defined according to a rule. According to a typical rule, a higher bandwidth value corresponds to a higher quality, and vice versa. The corresponding relationship between the current bandwidth value and the file quality can be preset or provided in time based on user feedback.

The client chooses an appropriate file quality according to the current bandwidth value, and the corresponding relationship between the current bandwidth value and the file quality. If current bandwidth value is null, the client may select the highest quality by default.

At block S203, the client receives from the server the file of the appropriate quality.

When receiving files returned from the server, the client records size of each file received, and the time spent on receiving each file.

Based on the file size and time to receive the file, the client may calculate a new value of the current bandwidth value and update it. Specifically, according to the size of each file and the time required to receive the file, the client may calculate a bandwidth value for each file separately using equation (1), and calculate an average current bandwidth value for all files received using the bandwidth values calculated separately for these files, using equation (3). The current bandwidth value may be set to be the average bandwidth value, and stored at the client.

The disclosed method is further described below from a server- centric point of view.

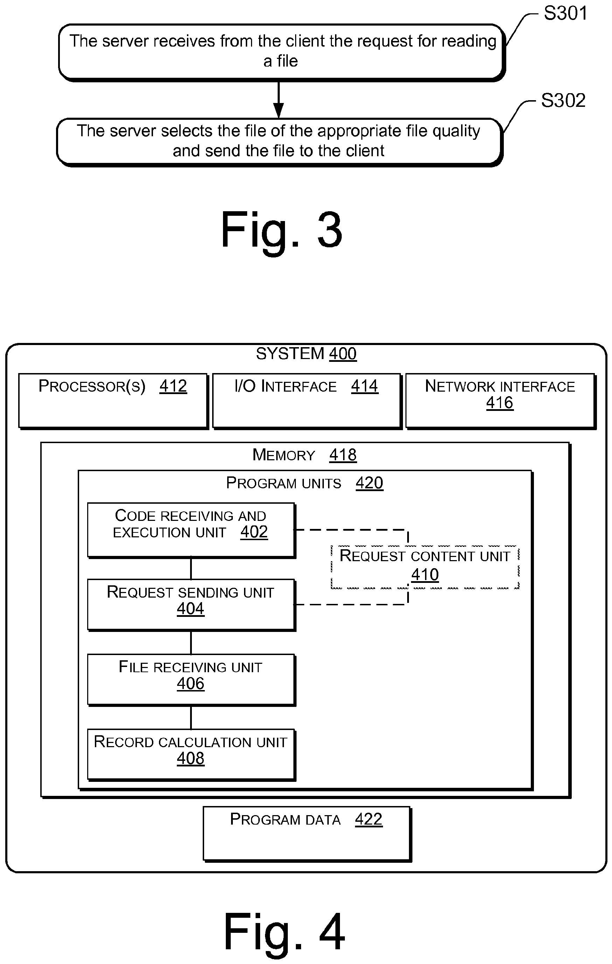

FIG. 3 is a flowchart of a server-centric process of the disclosed method for bandwidth-dependent file transfer.

At block S301, the server receives from the client the request for reading a file. The request includes a value of the current bandwidth, or the file quality corresponding to the current bandwidth.

If the request for reading a file includes a value of the current bandwidth, the server selects an appropriate file quality based on the corresponding relationship between the bandwidth values and various file qualities.

The current bandwidth value may include the client bandwidth values obtained in a previous file transfer. Or, the current bandwidth value may be a bandwidth value calculated after visiting a fixed-resource file that is used for such bandwidth value measurement purpose. The current bandwidth value may also be null. Examples of the method for calculating the current bandwidth value are described herein and not repeated.

The current bandwidth value has a corresponding relationship with the file quality, which may be defined according to a rule, as described herein.

The server chooses an appropriate file quality according to the current bandwidth value. If current bandwidth value is null, the server may select the highest quality by default.

At block S302, the server selects the file of an appropriate file quality and send the file to the client.

The server selects the file from multiple versions of the requested file according to the appropriate file quality determined at block S301, and returns the selected file to the client. The multiple versions of the requested file may be obtained by preprocessing the original file and stored at the server. Alternatively, the selected file may be obtained by processing the original file according to the selected file quality.

The association between the file and its corresponding file quality may be achieved using URL addresses. For example, a unique URL address may be set for each file quality to locate a version of the file corresponding to the respective file quality.

The requested file may be preprocessed to obtain the different compression versions of the requested file, which are stored at the server at a corresponding URL address. The server selects the URL corresponding to the current file quality, visits the URL to retrieve the corresponding version of file and return it to the client.

Alternatively, the requested file may be processed to obtain the different compression versions of the requested file upon receiving from the client the request for reading the file. For example, the server may set a URL for each file quality, but does not preprocess the file to obtain and store compressed files at these URL addresses until requested. When requested, the server analyzes the URL corresponding to the current file quality to determine an appropriate file quality, processes the original file accordingly to obtain a compressed file of the appropriate file quality, and returns the compressed file to the client.

According to another aspect of this disclosed method for bandwidth-dependent file transferring, after sending to the client the requested file at the selected quality level, the server then instructs the client to update the current bandwidth value according to, at least partially, a speed that the client has read the requested file. The updated current bandwidth value is used for reading a next file or browsing a next webpage.

In summary, the disclosed method for bandwidth-dependent file transfer establishes a corresponding relationship between bandwidth values and file quality levels to provide a requested file at a file quality appropriate to the network condition experienced by the user. The method calculates and updates in real time the current bandwidth value based on the receiving conditions of the current files received, and provide an updated current bandwidth value for next file transfer. The bandwidth value used for the current file transfer is therefore constantly updated based on the file transfers occurred previously. As the network condition of the user changes, the method is able to provide an appropriate file quality automatically adjusted for the new network condition.

In connection to the method disclosed herein, the present disclosure also provides a computerized system for implementing the bandwidth-dependent file transfer method described herein. The system may include a computing device having a processor, computer-readable memory and storage medium, and I/O devices, wherein the computing device is programmed to perform acts as described herein in connection with the example methods.

The above-described techniques may be implemented with the help of one or more non-transitory computer-readable media containing computer-executable instructions.

In the presence disclosure, a "module" in general refers to a functionality designed to perform a particular task or function. A module can be a piece of hardware, software, a plan or scheme, or a combination thereof, for effectuating a purpose associated with the particular task or function. In addition, delineation of separate modules does not necessarily suggest that physically separate devices are used. Instead, the delineation may be only functional, and the functions of several modules may be performed by a single combined device or component. When used in a computer-based system, regular computer components such as a processor, a storage and memory may be programmed to function as one or more modules to perform the various respective functions.

FIG. 4 is a block diagram of a system implementing a client-centric process of the disclosed method for bandwidth-dependent file transfer. As shown in FIG. 4, the system 400 includes code receiving and execution unit 402, request sending unit 404 and file receiving unit 406.

The code receiving unit and execution 402 is be used to receive a webpage code from a server, and to execute the received webpage code.

The request unit 404 is be used to send a request to read files to the server. The request to read files may include a current bandwidth value or specifies a file quality corresponding to the current bandwidth value.

The file receiving unit 406 is used for receiving the file of an appropriate file quality from the server.

The system 400 may also include record calculation unit 408 used to record the file sizes received at the file receiving unit 406 and the times taken to receive the files at the file receiving unit 406, and to calculate a new current bandwidth value of the current file transfer based on the recorded file size and receiving time data.

In an embodiment, the system for bandwidth-dependent file transfer may further include request content unit 410 which selects the file quality according to the current bandwidth value, and includes the selected file quality in the request to read files, such that the request specifies the file quality corresponding to the current bandwidth value.

In an embodiment, the system 400 may further include one or more processors 412, an input/output (I/O) interface 414, a network interface 416 and memory 418. The memory 418 may include program units 420 and program data 422. The program units 420 may include the code receiving and execution unit 402, the request sending unit 404, the file receiving unit 406 and/or the record calculation unit 408 as described above.

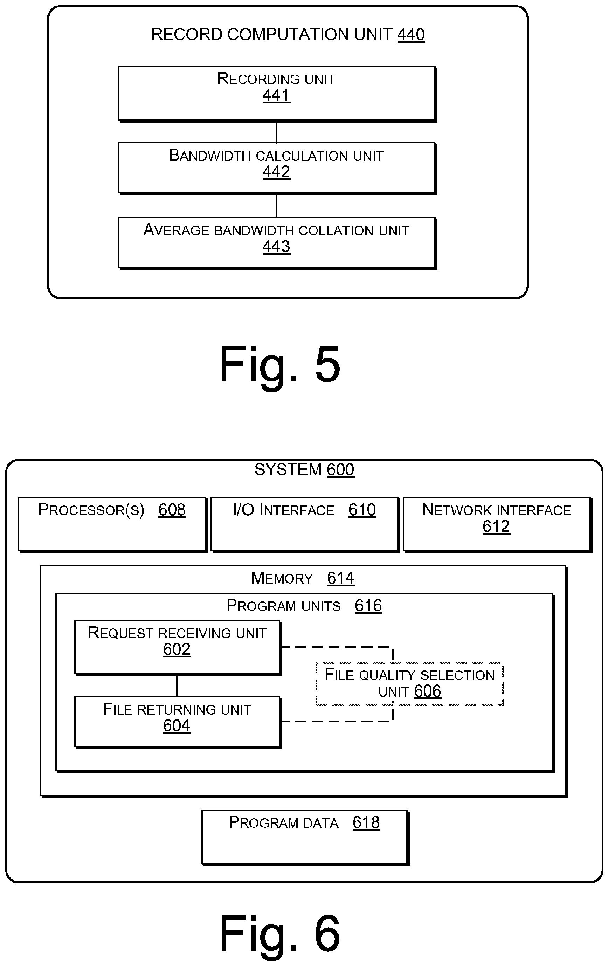

FIG. 5 is a block diagram of an example of the record calculation unit 408 used in the system of FIG. 4 for implementing a client-centric process of the disclosed method for bandwidth-dependent file transfer.

As shown in Figure 5, the record calculation unit 408 includes recording unit 441, bandwidth calculation unit 442 and average bandwidth calculation unit 443.

The recording unit 441 is be used to record the file sizes and file receiving times of the files received by the file receiving unit 406.

The bandwidth calculation unit 442 is be used to calculate a bandwidth value for each file based on the respective recorded file size and the file receiving time of each file.

The average bandwidth calculation unit 443 calculates an average bandwidth value for the client based on individual bandwidth values for each received file, and sets the average bandwidth value to be the new current bandwidth value.

The above described with FIGS. 4-5 are examples of client-centric systems for implementing client-centric processes.

FIG. 6 is a block diagram of a system implementing a server-centric process of the disclosed method for bandwidth-dependent file transfer.

As shown in FIGS. 6, the system 600 includes request receiving unit 602 and file returning unit 604.

The request receiving unit 602 is used to receive from a client requests to read files. The request may include the current bandwidth value or the file quality corresponding to the current bandwidth value.

The file returning unit 604 is used to return to the client a file of an appropriate file quality as specified in the request received from the client.

If the request received at the request receiving unit 602 includes the current bandwidth value, the system may further include a file quality selection unit 606 for selecting a file quality corresponding to the current bandwidth value.

Additionally, in an embodiment, the system 600 may further include one or more processors 608, an input/output (I/O) interface 610, a network interface 612 and memory 614. The memory 614 may include program units 616 and program data 618. In an embodiment, the program units 616 may include the request receiving unit 602, the file returning unit 604 and/or the file quality selection unit 606 as described above.

The above described with FIG. 6 is an example of server-centric systems for implementing server-centric processes.

The disclosed methods and systems may be implemented by either hardware modules or software modules. The modules in particular may be implemented using computer program modules based on machine executable commands and codes. Generally, a computer program module may perform particular tasks or implement particular abstract data types of routines, programs, objects, components, data structures, and so on. Techniques described in the present disclosure can also be practiced in distributed computing environments, such a distributed computing environment, to perform the tasks by remote processing devices connected through a communication network. In a distributed computing environment, program modules may be located in either local or remote computer storage media including memory devices.

With earlier technologies, hardware implementations (e.g., improvements to diodes, transistors, switches and circuits) and software implementations (e.g., improvements to a method or a process) may be clearly distinguishable. However, with the more recent developments of the technologies, processes can be achieved by directly modifying the hardware structure. Improvements to a method or a process can be programmed into the hardware circuits to result in an appropriate hardware in circuit structure. In other words, a process may be realized using hardware modules as well as software modules. Examples of available means may include programmable logic devices (Programmable Logic Device, or PLD) such as a field programmable gate array (Field Programmable Gate Array, or FPGA), which is an integrated circuit that allows logic functions to be realized by programming the device using hardware description language (Hardware Description Language, or HDL). Examples of HDL include ABEL (Advanced Boolean Expression Language), AHDL (Altera Hardware Description Language), Confluence, CUPL (Cornell University Programming Language), HDCal and JHDL (Java Hardware Description Language), Lava, Lola, MyHDL, PALASM and RHDL (Ruby Hardware Description Language). Currently, by far the most common HDL is VHDL (Very-High-Speed Integrated Circuit Hardware Description Language) and Verilog2. Those who are skilled in the art may use any available hardware description language for logic programming into integrated circuits, to realize the methods and systems described herein.

Controllers can be implemented by any appropriate means, such as a microprocessor or any device that can store computer-readable program codes (such as software or firmware) executable by a microprocessor. Examples of such means include computer readable media, logic gates, switches and ASICs (Application Specific Integrated Circuit), programmable logic controllers and embedded micro-controller. A memory controller can also be implemented as part of the control logic of the memory.

The technique described in the present disclosure may be implemented in a general computing equipment or environment or a specialized computing equipment or environment, including but not limited to personal computers, server computers, hand-held devices or portable devices, tablet devices, multiprocessor systems, microprocessor-based systems, set-top boxes, programmable consumer devices, network PCs, microcomputers and large-scale mainframe computers, or any distributed environment including one or more of the above examples.

In a typical configuration, a computing device includes one or more processors (CPU), input / output interfaces, network interfaces, and memory. The memory may include a computer-readable medium such as a volatile memory, random access memory (RAM) and/or other forms of nonvolatile memory, such as read only memory (ROM) or flash memory (flash RAM). The internal memory of a computing device is a type of computer-readable memory medium. For example, the memory 418 of the system 400 and the memory 614 of the system 600 are an example of computer-readable media.

The computer-readable media include permanent and non-permanent, removable and non-removable media, and may be formed in any method or technology for storage of information. Information stored may be a set of computer-readable instructions, data structures, program modules or other data. Examples of the computer storage media include, but are not limited to, phase-change memory (PRAM), a static random access memory (SRAM), dynamic random access memory (DRAM), other types of random access memory (RAM), read-only memory (ROM), electrically erasable programmable read-only memory (EEPROM), flash memory or other memory technology, CD-ROM read-only memory (CD-ROM), digital versatile disc (DVD) or other optical storages, magnetic cassettes, magnetic tape disk storage or other magnetic storage devices, or any other non-transmission medium that may be used to store information accessible by a computing device. According to definitions of the present disclosure, computer-readable media do not include temporary computer readable media (transitory media), such as a modulated data signal and a carrier wave.

Various embodiments of the present specification are described progressively increased details with examples and environments. Each embodiment may focus a certain aspect of the disclosure, and therefore different embodiments may differ from one another, but may also share similar parts.

Exemplary embodiments are employed to illustrate the concept and implementation of the present invention as defined by the appended claims.

## Claims

1. A method for bandwidth-dependent file transferring, the method comprising:

   receiving (S101), by a client, from a server, a web page code, wherein the web page code contains codes that, when executed by the client, query for or request a value of a current bandwidth, wherein the value of the current bandwidth includes a client bandwidth value obtained in a previous file transfer, and wherein the web page code comprises corresponding relationships between a plurality of quality levels and various ranges of values of bandwidth; selecting, by the client, one quality level of the plurality of quality levels for a next file to be requested according to the value of the current bandwidth, wherein the one quality level is selected using the relationships between the plurality of quality levels and the various ranges of values of bandwidth, and the selected quality level corresponds to a range which comprises the value of the current bandwidth;

sending (S102) by the client, to the server, the request for reading the next file, wherein the next file can be sent, by the server, at the plurality of quality levels, and wherein the request for reading the next file specifies the selected quality level; and

receiving (S105), at the client, from the server, the next file at the selected quality level.

2. A method for bandwidth-dependent file transferring, the method comprising:

sending (S101), by a server, to a client, a web page code, wherein the web page code contains codes that, when executed by the client, query for or request a value of a current bandwidth, wherein the value of the current bandwidth includes a client bandwidth value obtained in a previous file transfer, and wherein the webpage code comprises corresponding relationships between a plurality of quality levels and various ranges of values of bandwidth;

receiving (S103), by the server, from the client, a request for reading a next file, wherein the next file can be sent, by the server, at the plurality of quality levels, and wherein the request for reading the next file specifies a selected quality level which corresponds to a range which comprises the value of the current bandwidth; and

sending (S105), by the server, to the client, the next file at the selected quality level.

3. The method as recited in claim 2, further comprising: providing a plurality of versions of the next file, the plurality of versions respectively representing the plurality of quality levels, wherein the sending from the server to the client the next file at the selected quality level comprises sending one of the plurality of versions representing the selected quality level.

4. The method as recited in claim 3, wherein the providing the plurality of versions of the next file comprises:

a) pre-processing the next file to obtain the plurality of versions of the next file; and storing the plurality of versions of the next file; or
b) processing the next file to obtain the plurality of versions of the next file upon receiving from the client the request for reading the next file.

5. A client (400) comprising a processor (412), computer-readable memory (418) and storage medium, and I/O devices (414), wherein the client is programmed to perform the method of claim 1.

6. A server (600) comprising a processor (608), computer-readable memory (614) and storage medium, and I/O devices (610), wherein the server is programmed to perform the method of any of claims 2 to 4.

**Patentansprüche**

1. Verfahren zum bandbreitenabhängigen Dateitransfer, wobei das Verfahren umfasst:

Empfangen (S101), durch einen Client, von einem Server eines Webseitencodes, wobei der Webseitencode Codes enthält, die, wenn sie von dem Client ausgeführt werden, einen Wert einer aktuellen Bandbreite abfragen, oder diesen beantragen, wobei der Wert der aktuellen Bandbreite einen Client-Bandbreitenwert beinhaltet, der in einem vorstehenden Dateitransfer erhalten worden ist, und wobei der Webseitencode entsprechende Beziehungen zwischen einer Vielzahl von Qualitätsstufen und verschiedenen Bereichen von Bandbreitenwerten umfasst;

Auswählen, durch den Client, einer Qualitätsstufe aus der Vielzahl von Qualitätsstufen für eine nächste, entsprechend dem Wert der aktuellen Bandbreite zu beantragende Datei, wobei die eine Qualitätsstufe unter Verwendung der Beziehungen zwischen der Vielzahl von Qualitätsstufen und verschiedenen Bereichen von Bandbreitenwerten ausgewählt wird, und die ausgewählte Qualitätsstufe einem Bereich entspricht, der den Wert der aktuellen Bandbreite umfasst;

Senden (S102), durch den Client, an den Server des Antrags zum Lesen der nächsten Datei, wobei die nächste Datei durch den Server auf der Vielzahl von Qualitätsstufen gesendet werden kann, und wobei der Antrag zum Lesen der nächsten Datei die ausgewählte Qualitätsstufe spezifiziert; und

Empfangen (S105) beim Client, vom Server der nächsten Datei auf der ausgewählten Qualitätsstufe.

2. Verfahren zum bandbreitenabhängigen Dateitransfer, wobei das Verfahren umfasst:

Senden (S101), durch einen Server, an einen Client eines Webseitencodes, wobei der Webseitencode Codes enthält, die, wenn sie von dem Client ausgeführt werden, einen Wert einer aktuellen Bandbreite abfragen, oder diesen beantragen, wobei der Wert der aktuellen Bandbreite einen Client-Bandbreitenwert beinhaltet, der in einem vorstehenden Dateitransfer erhalten worden ist, und wobei der Webseitencode entsprechende Beziehungen zwischen einer Vielzahl von Qualitätsstufen und verschiedenen Bereichen von Bandbreitenwerten umfasst;

Empfangen (S103), durch den Server, von dem Client, eines Antrags zum Lesen der nächsten Datei, wobei die nächste Datei durch den Server auf der Vielzahl von Qualitätsstufen gesendet werden kann, und wobei der Antrag zum Lesen der nächsten Datei eine ausgewählte Qualitätsstufe spezifiziert, die einem Bereich entspricht, der den Wert der aktuellen Bandbreite umfasst; und

Senden (S105), durch den Server, an den Client, der nächsten Datei auf der ausgewählten Qualitätsstufe.

**3.** Verfahren nach Anspruch 2, weiter umfassend: Bereitstellen einer Vielzahl von Versionen der nächsten Datei, wobei die Vielzahl von Versionen jeweils die Vielzahl von Qualitätsstufen repräsentiert, wobei das Senden von dem Server an den Client der nächsten Datei auf der ausgewählten Qualitätsstufe Senden einer der Vielzahl von Versionen umfasst, die die ausgewählte Qualitätsstufe repräsentiert.

**4.** Verfahren nach Anspruch 3, wobei das Bereitstellen der Vielzahl von Versionen der nächsten Datei umfasst:

a) Vorverarbeiten der nächsten Datei zum Erhalten der Vielzahl von Versionen der nächsten Datei; und
Speichern der Vielzahl von Versionen der nächsten Datei; oder
b) Verarbeiten der nächsten Datei zum Erhalten der Vielzahl von Versionen der nächsten Datei bei Empfangen vom Client des Antrags zum Lesen der nächsten Datei.

**5.** Client (400), umfassend einen Prozessor (412), computerlesbaren Speicher (418) und Speichermedium, und E/A-Vorrichtungen (414), wobei der Client programmiert ist, um das Verfahren nach Anspruch 1 auszuführen.

**6.** Server (600), umfassend einen Prozessor (608), computerlesbaren Speicher (614) und Speichermedium, und E/A-Vorrichtungen (610), wobei der Server programmiert ist, um das Verfahren nach einem der Ansprüche 2 bis 4 auszuführen.

**Revendications**

**1.** Procédé de transfert de fichiers dépendant de la largeur de bande, le procédé comprenant :

la réception (S101), par un client, à partir d'un serveur, d'un code de page Web, dans lequel le code de page Web contient des codes qui, quand ils sont exécutés par le client, interrogent sur ou demande une valeur d'une largeur de bande actuelle, dans lequel la valeur de la largeur de bande actuelle inclut une valeur de largeur de bande de client obtenue dans un transfert de fichier précédent, et dans lequel le code de page Web comprend des relations correspondantes entre une pluralité de niveaux de qualité et diverses plages de valeurs de largeur de bande ;

la sélection, par le client, d'un niveau de qualité de la pluralité de niveaux de qualité pour un fichier suivant à demander en fonction de la valeur de la largeur de bande actuelle, dans lequel l'un niveau de qualité est sélectionné en utilisant les relations entre la pluralité de niveaux de qualité et les diverses plages de valeurs de largeur de bande, et le niveau de qualité sélectionné correspond à une plage qui comprend la valeur de la largeur de bande actuelle ;

l'envoi (S102), par le client, au serveur, de la demande de lecture du fichier suivant, dans lequel le fichier suivant peut être envoyé, par le serveur, à la pluralité de niveaux de qualité, et dans lequel la demande de lecture du fichier suivant spécifie le niveau de qualité sélectionné ; et

la réception (S105), au niveau du client, à partir du serveur, du fichier suivant au niveau de qualité sélectionné.

**2.** Procédé de transfert de fichiers dépendant de la largeur de bande, le procédé comprenant :

l'envoi (S101), par un serveur, à un client, d'un code de page Web, dans lequel le code de page Web contient des codes qui, quand ils sont exécutés par le client, interrogent sur ou demande une valeur d'une largeur de bande actuelle, dans lequel la valeur de la largeur de bande actuelle inclut une valeur de largeur de bande de client obtenue dans un transfert de fichier précédent, et dans lequel le code de page Web comprend des relations correspondantes entre une pluralité de niveaux de qualité et diverses plages de valeurs de largeur de bande ;

la réception (S103), par le serveur, à partir du client, d'une demande de lecture d'un fichier suivant, dans lequel le fichier suivant peut être envoyé, par le serveur, à la pluralité de niveaux de qualité, et dans lequel la demande de lecture du fichier suivant spécifie un niveau de qualité sélectionné qui correspond à une plage qui comprend la valeur de la largeur de bande actuelle ; et

l'envoi (S105), par le serveur, au client, du fichier suivant au niveau de qualité sélectionné.

3. Procédé selon la revendication 2, comprenant en outre :
la fourniture d'une pluralité de versions du fichier suivant, la pluralité de versions représentant respectivement la pluralité de niveaux de qualité, dans lequel l'envoi du serveur au client du fichier suivant au niveau de qualité sélectionné comprend l'envoi d'une de la pluralité de versions représentant le niveau de qualité sélectionné.

4. Procédé selon la revendication 3, dans lequel la fourniture de la pluralité de versions du fichier suivant comprend :

   a) le prétraitement du fichier suivant pour obtenir la pluralité de versions du fichier suivant ; et le stockage de la pluralité de versions du fichier suivant ; ou
   b) le traitement du fichier suivant pour obtenir la pluralité de versions du fichier suivant lors de la réception à partir du client de la demande de lecture du fichier suivant.

5. Client (400) comprenant un processeur (412), une mémoire lisible par ordinateur (418) et un support de stockage, et des dispositifs I/O (414), dans lequel le client est programmé pour effectuer le procédé selon la revendication 1.

6. Serveur (600) comprenant un processeur (608), une mémoire lisible par ordinateur (614) et un support de stockage, et des dispositifs I/O (610), dans lequel le serveur est programmé pour effectuer le procédé selon l'une quelconque des revendications 2 à 4.

S101

A client receives a webpage code from a server, and executes the webpage code

S102

The client sends a file read request to the server

S103

The server receives from the client the request for reading a file

S104

The server selects the file of the appropriate file quality and send the file to the client

S105

The client receives from the server the file of the appropriate quality

# Fig. 1

S201

A client receives a webpage code from a server, and executes the webpage code

S202

The client sends a file read request to the server

S203

The client receives from the server the file of the appropriate quality

# Fig. 2

S301

The server receives from the client the request for reading a file

S302

The server selects the file of the appropriate file quality and send the file to the client

# Fig. 3

SYSTEM 400

| PROCESSOR(S) 412 | I/O INTERFACE 414 | NETWORK INTERFACE 416 |
|---|---|---|

MEMORY 418

PROGRAM UNITS 420

CODE RECEIVING AND EXECUTION UNIT 402

REQUEST CONTENT UNIT 410

REQUEST SENDING UNIT 404

FILE RECEIVING UNIT 406

RECORD CALCULATION UNIT 408

PROGRAM DATA 422

# Fig. 4

RECORD COMPUTATION UNIT 440

RECORDING UNIT
441

BANDWIDTH CALCULATION UNIT
442

AVERAGE BANDWIDTH COLLATION UNIT
443

# Fig. 5

SYSTEM 600

PROCESSOR(S)  608 | I/O INTERFACE  610 | NETWORK INTERFACE 612

MEMORY  614

PROGRAM UNITS  616

REQUEST RECEIVING UNIT
602

FILE QUALITY SELECTION
UNIT 606

FILE RETURNING UNIT
604

PROGRAM DATA  618

# Fig. 6

**EP 3 135 019 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012005366 A1
- US 2012259950 A1
- US 2012192080 A1
- US 2013185388 A1
- US 2001010059 A1
- WO 2013004260 A1